# EUROPEAN PATENT SPECIFICATION

(11) **EP 3 419 127 B1**
(45) Date of publication and mention of the grant of the patent: **18.03.2020**
(21) Application number: 18175686.7
(22) Date of filing: 04.06.2018
(51) Int. Cl.: H02B 1/28, H05K 5/02

(54) **WATERTIGHT ELECTRICAL CABINET**
WASSERDICHTER SCHALTSCHRANK
ARMOIRE ÉLECTRIQUE ÉTANCHE À L'EAU

(30) Priority: 19.06.2017 IT 201700067924
(43) Date of publication of application: 26.12.2018
(73) Proprietor: GEWISS S.p.A., 24069 Cenate Sotto (Bergamo) (IT)
(72) Inventor: DOMENICO, Bosatelli, 24069 Bergamo (IT)
(74) Representative: Forattini, Amelia

(56) References cited:
- EP-A1- 2 560 469
- DE-U1-202017 000 742
- US-A1- 2002 090 506

## Description

The present invention relates to a watertight electrical board.

As is known, an electrical board with a high protection degree is generally constituted by a cabinet-like metal structure.

Currently no watertight boards made of polyester with a high protection degree, such as an IPX9, are commercially available.

DE202017000742 U1 discloses a pressure relief device configured to be mounted in an opening of a plastic housing for electrical equipment. The pressure release device has a gas-permeable and liquid-resistant venting device configured to allow gas to pass between the first side and the second side of the device.

US2002/090506 discloses a plastic body with a microporous, waterproof and gas-permeable membrane for electronic housings. The plastic body has a metalized surface. Consequently, the plastic body and the housing act as a shield against the entering and leaving of electromagnetic waves. There is a high gas permeability of the membrane for venting of the electronic housing.

EP2560469 discloses venting devices, for electronic housings, designed to be waterproof even under drastic circumstances, as simulated e.g. by the IPX9K test (ISO 20653).

The aim of the present invention is to provide a watertight electrical board made of polyester, provided with an improved protection and venting system.

Within the scope of this aim, an object of the invention is to provide a watertight electrical board with an IPX9 protection degree according to the CEI EN 60529/A2 standard.

Another object of the present invention is to provide a board which, by virtue of its particular constructive characteristics, is capable of giving the greatest assurances of reliability and safety in use.

This aim, these objects and others which will become better apparent hereinafter are achieved by a watertight electrical board, comprising a cabinet made of polyester, with an IPX9 protection degree, and having a protection and venting system; said board being characterized in that said protection and venting system comprises a casing made of plastic material, which is internally provided with an oleophobic membrane made of expanded polytetrafluoroethylene (ePTFE); said casing comprising a fastening head and being inserted in a hole formed in a wall of said board; said casing being locked in said hole by means of a fastening nut.

Further characteristics and advantages will become better apparent from the description of preferred but not exclusive embodiments of the invention, illustrated by way of nonlimiting example in the accompanying drawings, wherein:

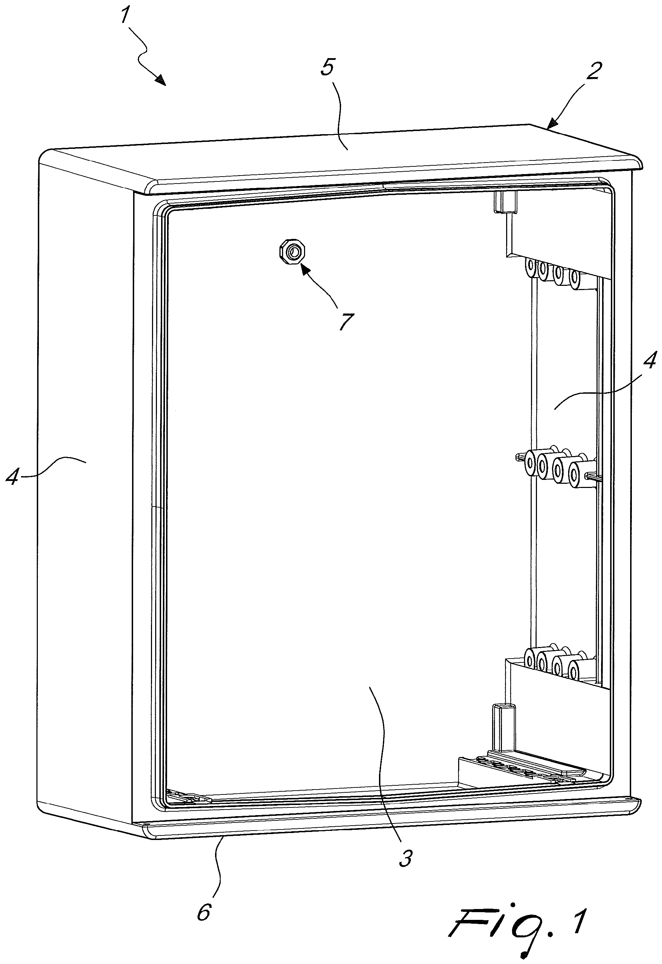

Figure 1 is a perspective view of the front part of the electrical board according to the present invention, without the closure door;

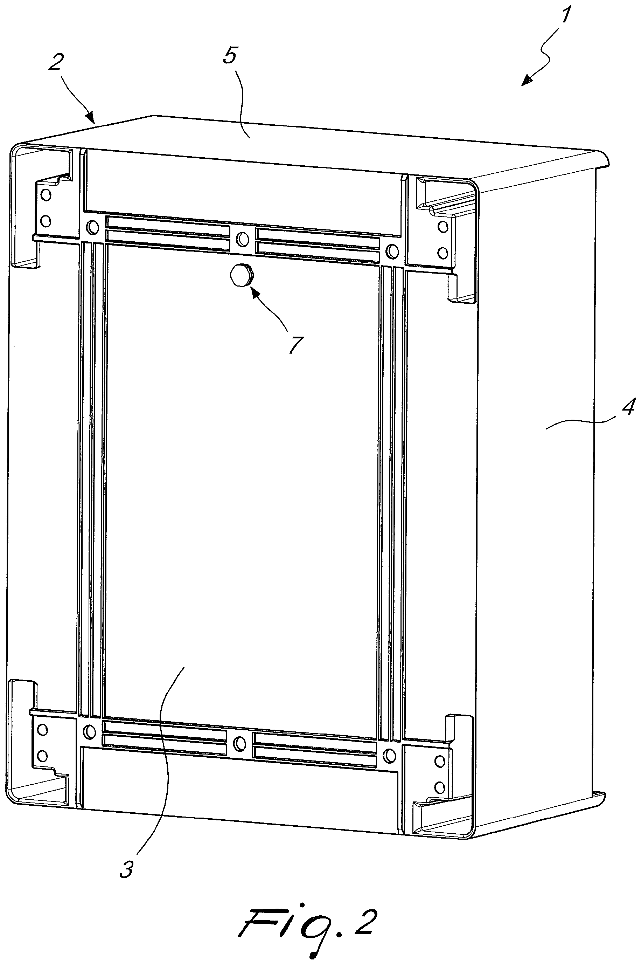

Figure 2 is a perspective view of the rear part of the electrical board;

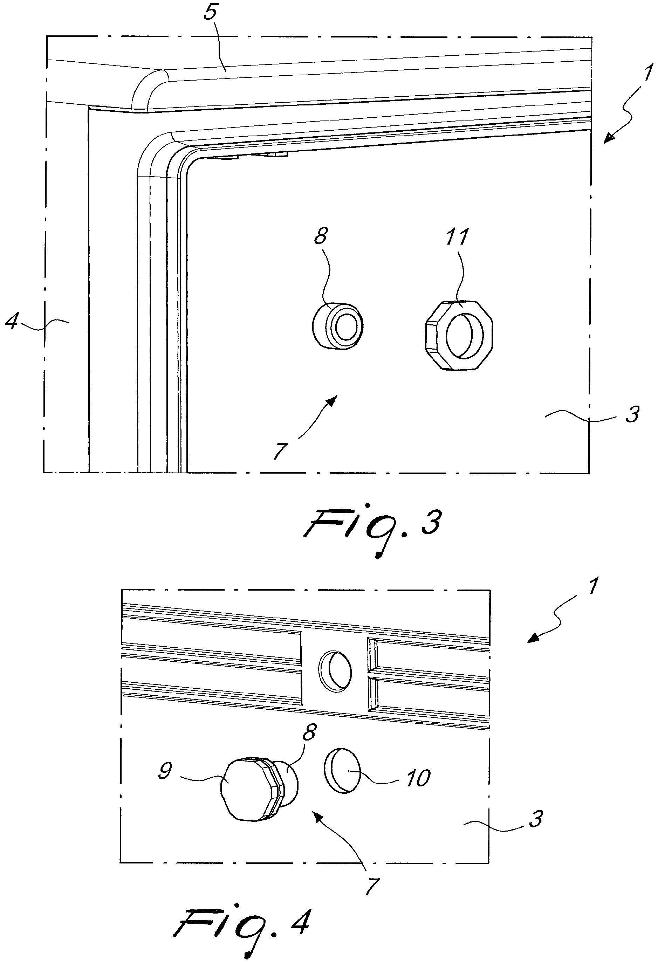

Figure 3 is a partially exploded perspective view showing the venting system as seen from the inner side of the rear wall of the electrical board;
Figure 4 is a partially exploded perspective view showing the venting system as seen from the outer side of the rear wall of the electrical board.

With reference to the cited figures, the electrical board according to the invention, generally designated by the reference numeral 1, includes a cabinet 2 which has a rear wall 3, side walls 4, an upper wall 5, a lower wall 6 and a door, which is not shown in the figures.

The cabinet 2 is made of polyester and forms a watertight board with an IPX9 protection degree.

According to the present invention, the watertight electrical board has a protection and venting system, generally designated by the reference numeral 7, which includes a casing 8 made of plastic material.

The casing 8 is internally provided with an oleophobic membrane made of expanded polytetrafluoroethylene (ePTFE), which has characteristics of protection against the penetration of particulate matter and water and is adapted to equalize pressure, reducing condensation within the closed casing.

The casing 8 includes a fastening head 9 and is inserted in a hole 10 which is formed in the rear wall 3 of the watertight board 1.

The casing 8 is locked in the hole 10 by means of a fastening nut 11.

In practice it has been found that the invention achieves the intended aim and objects, providing a watertight board made of polyester and having an effective venting system which ensures complete protection against the penetration of particulate matter and water and at the same time allows to compensate pressure and to reduce condensation inside the watertight structure.

The materials used, as well as the dimensions, may of course be any according to the requirements and the state of the art.

## Claims

1. A watertight electrical board, comprising a cabinet (2) made of polyester, with an IPX9 protection degree, and having a protection and venting system (7); said board being **characterized in that** said protection and venting system (7) comprises a casing (8), made of plastic material, which is internally provided with an oleophobic membrane made of expanded polytetrafluoroethylene (ePTFE); said casing (8) comprising a fastening head (9) and being inserted in a hole (10) formed in a wall (3) of said board (1); said casing (8) being locked in said hole (10) by means of a fastening nut (11).

2. The board according to claim 1, **characterized in that** said cabinet (2) comprises a rear wall (3), side walls (4), an upper wall (5), a lower wall (6), and a door.

## Patentansprüche

1. Eine wasserdichte Steuerelektronik, die einen Schrank (2) aus Polyester umfasst, mit einem IPX9-Schutzgrad und einem Schutz- und Belüftungssystem (7); wobei die Elektronik **dadurch gekennzeichnet ist, dass** das Schutz- und Belüftungssystem (7) ein Gehäuse (8) aus Kunststoffmaterial umfasst, das innen mit einer oleophoben Membran aus geschäumtem Polytetrafluorethylen (ePTFE) ausgestattet ist; wobei das Gehäuse (8) einen Befestigungskopf (9) umfasst und in eine Öffnung (10) eingesetzt ist, die in einer Wand (3) der Elektronik (1) geformt ist; wobei das Gehäuse (8) mit Hilfe einer Befestigungsmutter (11) in der Öffnung (10) blockiert ist.

2. Die Elektronik gemäß Anspruch 1, **dadurch gekennzeichnet, dass** der Schrank (2) eine Rückwand (3), Seitenwände (4), eine obere Wand (5), eine untere Wand (6) und eine Tür umfasst.

## Revendications

1. Tableau électrique étanche à l'eau comprenant une armoire (2) construite en polyester, avec un indice de protection IPX9 et comportant un système de protection et de ventilation (7); ledit tableau étant **caractérisé en ce que** ledit système de protection et de ventilation (7) comprend un boîtier (8) construit en matériau plastique, qui est pourvu de manière interne d'une membrane oléophobe construite en polytétrafluoroéthylène expansé (ePTFE); ledit boîtier (8) comprenant une tête de fixation (9) et étant inséré dans un trou (10) formé dans une paroi (3) dudit tableau (1); ledit boîtier (8) étant bloqué dans ledit trou (10) au moyen d'un écrou de fixation (11).

2. Tableau selon la revendication 1, **caractérisé en ce que** ladite armoire (2) comprend une paroi arrière (3), des parois latérales (4), une paroi supérieure (5), une paroi inférieure (6) et une porte.
